# EUROPEAN PATENT SPECIFICATION

(11) **EP 4 001 598 B1**
(45) Date of publication and mention of the grant of the patent: **17.07.2024**
(21) Application number: 21208246.5
(22) Date of filing: 15.11.2021
(51) Int. Cl.: F01K 17/00, F22B 37/00, F25B 29/00, F24D 10/00, F24D 15/04, F23J 15/04, F23J 15/06, F23J 15/00, F25B 15/04

(54) **METHOD AND ARRANGEMENT**
VERFAHREN UND ANORDNUNG
PROCÉDÉ ET AGENCEMENT

(30) Priority: 16.11.2020 FI 20206158
(43) Date of publication of application: 25.05.2022
(73) Proprietor: Valmet Technologies Oy, 02150 Espoo (FI)
(72) Inventor: PAAVOLA, Mikko, 33900 Tampere (FI); HANNULA, Kalle, 33900 Tampere (FI); HANNULA, Ville, 33900 Tampere (FI); HANNULA, Olli, 33900 Tampere (FI)
(74) Representative: Papula Oy

(56) References cited:
- EP-A1- 1 816 397
- EP-A1- 3 708 915
- DE-A1- 3 607 356
- FR-A3- 2 979 974
- US-A- 4 660 511
- US-A1- 2018 245 800

## Description

### BACKGROUND

The invention relates to a method for recovering heat from flue gas of a boiler.

The invention further relates to an arrangement for recovering heat from flue gas of a boiler.

It is known to use flue gas washing and condensing systems, such as condensers and scrubbers, in combustion plants for recovering heat from flue gas which is produced in the combustion of a fuel. In a flue gas scrubber, the flue gas is cooled by scrubbing water so that water vapour contained in the flue gas condenses and the released condensing heat may be utilized, for instance, in a district heating plant where the condensing heat is used to heat district heating water. The scrubbing water is circulated through a heat exchanger where heat energy is transferred into district heating water.

It is also known to connect a heat pump between a supply channel feeding heated water in a district heating network and a return channel supplying district heating water returning from the district heating network back into the heat exchanger for heating. The heat pump is configured to heat the district heating water in the supply channel by using heat energy of water running in the return channel. An advantage is that cooler water is supplied in the heat exchanger and thus flue gases can be condensed to a lower temperature.

Typical district heating power plants in the Nordics adjust their load depending on the outside temperature. Power plant load is decreased towards the summer season and when minimum loads are needed flue gas heat recovery plants are shut down or the effect has been minimized to reach low load for the plant. Thus, the overall energy efficiency of the plant is lowered in summer season.

EP 3708915 discloses a district-heating system that includes a power plant and a large number of heat consumers.

### BRIEF DESCRIPTION

Viewed from a first aspect, there can be provided a method for recovering heat from flue gas of a boiler, the method comprising
- passing the flue gas of the boiler though a flue gas cooling unit,
- cooling the flue gas in the flue gas cooling unit, said cooling comprising transferring heat from the flue gas into a circulation of a flue gas cooling liquid,
- transferring heat energy of said flue gas cooling liquid heated in the flue gas cooling unit into a heat pump,
- arranging the heat pump for receiving heat energy also from a circulation arrangement of a district cooling system, wherein
- the heat pump is coupled to a circulation arrangement of a district heating system, wherein the method further comprises
- transferring in the heat pump heat energy received
   -- from said cooling liquid and
   -- from said circulation arrangement of district cooling system
   -- into said circulation arrangement of district heating system, for
   -- lowering the temperature of said flue gas cooling liquid and cooling fluid of said district cooling system, and
   -- raising the temperature of heating fluid of said district heating system.

Thereby a method having high energy efficiency year-round may be achieved.

Viewed from a further aspect, there can be provided an arrangement for recovering heat from flue gas of a boiler, the arrangement comprising a flue gas cooling unit, configured to cool the flue gas with a flue gas cooling liquid, a heat pump coupled to the flue gas cooling unit, to a circulation arrangement of a district cooling system, and to a circulation arrangement of a district heating system, the heat pump arranged to receive flue gas cooling liquid heated in said flue gas cooling unit, district cooling fluid from the circulation arrangement of a district cooling system, and district heating fluid from the circulation arrangement of a district heating system, the heat pump configured for receiving heat energy from the flue gas cooling liquid, for receiving heat energy from the district cooling fluid, and for raising temperature of the district heating fluid.

Thereby an arrangement having high energy efficiency year-round may be achieved.

The arrangement and the method are characterised by what is stated in the independent claims. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

In one embodiment, the flue gas cooling unit comprises a flue gas scrubber.

An advantage is that a high capacity of cooling may be achieved with an inexpensive way.

In one embodiment, the flue gas cooling liquid is circulating through a plurality of heat exchange zones of the flue gas scrubber.

An advantage is that capacity of cooling may further be achieved with an inexpensive way.

In one embodiment, the flue gas cooling unit comprises a tube heat exchanger.

An advantage is that the flue gas cooling unit has a low electricity consumption and a compact size that facilities designing the layout of the cooling unit.

In one embodiment, the arrangement comprises a combustion air humidifier, and the method comprises feeding flue gas cooling liquid from the flue gas cooling unit into a combustion air humidifier, heating and moisturizing combustion air to be fed in the boiler by heat energy of said flue gas cooling liquid in said combustion air humidifier, and exiting flue gas cooling liquid cooled in the combustion air humidifier from said combustion air humidifier, the method further comprising transferring heat energy of flue gas cooling liquid exiting the combustion air humidifier into the heat pump.

An advantage is that condensation of the water vapor and amount of heat energy released and recovered in the scrubbing water may be promoted.

In one embodiment, the flue gas cooling liquid is fed in the heat pump and circulated back therefrom to the flue gas cooling unit.

An advantage is that a very simple structure of arrangement may be achieved.

In one embodiment, the flue gas cooling liquid is fed in a heat exchanger, and in the heat exchanger heat energy from the flue gas cooling liquid is transferred into a transfer liquid circulating between the heat exchanger and the heat pump.

An advantage is that the heat pump is isolated from the flue gas cooling liquid that may be highly corrosive, and thus the heat pump may be manufactured from less expensive materials.

In one embodiment, the heat pump is an electrical heat pump.

An advantage is that the heat pump is simple and has compact outer dimensions.

In one embodiment, the heat pump is an absorption heat pump (AHP) .

An advantage is that it is inexpensive to run the AHP since its electricity consumption is low and free heat energy is available from the boiler.

In one embodiment, steam and/or hot water is fed in a generator of the AHP for driving the AHP.

An advantage is that the heat pump may be driven with an inexpensive way.

In one embodiment, all the district heating fluid coming from the circulation arrangement of district heating system is fed in the heat pump.

An advantage is that capacity of transferring heat energy from the flue gas cooling unit and the district cooling system to the district heating system may be extended.

In one embodiment, only a part of the district heating fluid coming from the circulation arrangement of district heating system is fed in the heat pump, and rest of said district heating fluid is fed past the heat pump.

An advantage is that size of the heat pump may be kept reasonable even if the district heating system is large.

### BRIEF DESCRIPTION OF FIGURES

Some embodiments illustrating the present invention are described in more detail in the attached drawings, in which
Figure 1 is a schematic side view of an arrangement and method for recovering heat from flue gas of a boiler,
Figure 2 is a schematic side view of another arrangement and method for recovering heat from flue gas of a boiler,
Figure 3 is a schematic side view of a third arrangement and method for recovering heat from flue gas of a boiler, and
Figure 4 is a schematic side view of a fourth arrangement and method for recovering heat from flue gas of a boiler.

In the figures, some embodiments are shown simplified for the sake of clarity. Similar parts are marked with the same reference numbers in the figures.

### DETAILED DESCRIPTION

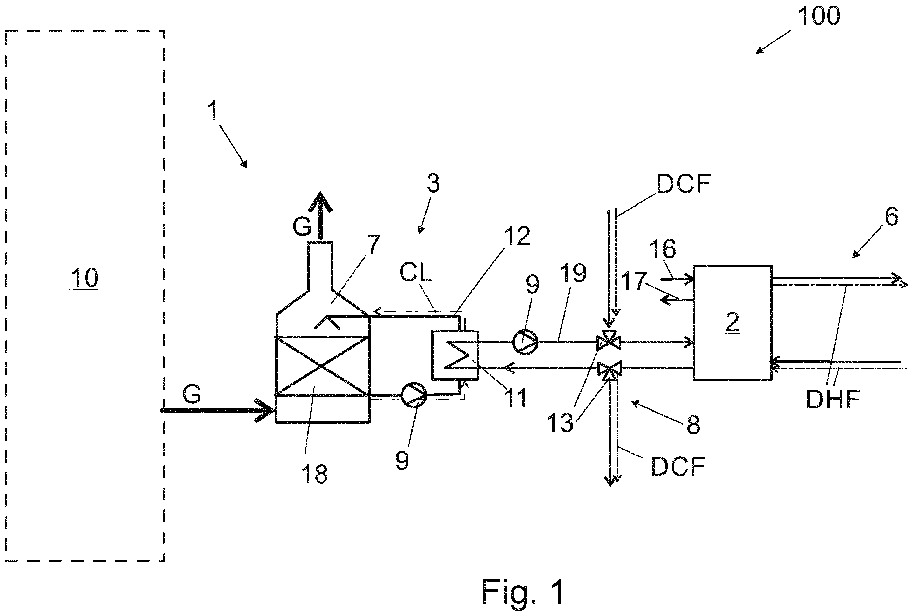

Figure 1 is a schematic side view of an arrangement and method for recovering heat from flue gas of a boiler.

In the embodiment shown in Figure 1, the boiler 10 is a heating boiler that burns a combustion process fuel, such as biomass or fossil fuel. The heat energy that is released in the combustion of the fuel is used to heat water that flows in a district heating network through a circulation arrangement of district heating water 6.

However, it is to be noted, that the arrangement and the method may be applied in various types of combustion plants. The boiler may be, for instance, any type of chemical recovery boiler, fluidized bed boiler, pulverized coal fired boiler, gas fired boiler, pulverized pellet fired boiler, etc. The arrangement and the method may also be applied in combustion engines.

The arrangement 100 comprises a flue gas cooling unit 1 that is configured to cool the flue gas G with a cooling liquid CL.

In the embodiment shown in Figure 1, the flue gas cooling unit 1 comprises a flue gas condenser, such as a flue gas scrubber 7 wherein the cooling liquid CL comprises scrubbing water.

It is to be noted here, that in some embodiments the flue gas cooling unit 1 comprises a tube heat exchanger, wherein the cooling takes place by a circulation liquid.

In the flue gas scrubber 7, the flue gas is passed through one or more heat exchange zone(s) or packing zone(s). The flue gas scrubber 7 shown in Figure 1 comprises one packing zone 18. The packing zone comprises a random packing bed acting as a heat and mass transfer surface.

The flue gas G is cooled by spraying scrubbing water over the packing zone 18 and heat energy is released from the flue gas and recovered into the scrubbing water.

The amount of heat energy that is released in the scrubbing process depends on the temperature of the scrubbing water, the dew point of the flue gas, as well as flue gas temperature and composition, available cooling liquid flow and temperature, such as temperature of district heating return water, connections and design of the complete system, and components and concepts thereof. The dew point depends on the moisture content of the flue gas. If the flue gas can be cooled under its dew point, the water vapor contained in the flue gas condenses and a large amount of heat energy is released and recovered into the scrubbing water.

The arrangement 100 further comprises a heat pump 2 that is coupled to the flue gas cooling unit 1. In one embodiment, such as shown in Figure 1, the heat pump 2 is coupled to the flue gas cooling unit 1 by a heat exchanger 11. The flue gas cooling liquid CL is circulated by using one or more pump(s) 9 from the flue gas cooling unit 1 into the heat exchanger 11, and then back to the flue gas cooling unit 1. In the heat exchanger 11 heat from the flue gas cooling liquid CL is transferred into a transfer liquid circulating in a transfer piping 19 between the heat exchanger 11 and the heat pump 2.

In another embodiment, there is no heat exchanger 11 but the flue gas cooling liquid CL (or at least part of it) is fed in the heat pump 2.

The heat pump 2 is also connected to a circulation arrangement 6 of district heating system for receiving district heating fluid DHF, such as heating water of the district heating water system. The circulation arrangement 6 feeds heating water returning from a district heating network (not shown) used for heating e.g. residential and commercial objects in the heat pump 2.

Additionally, the heat pump 2 is connected to a circulation arrangement 8 of district cooling system for receiving district heating fluid DCF, such as cooling water of the district cooling system. The circulation arrangement 8 feeds cooling water returning from a district cooling network (not shown) used for cooling e.g. residential and commercial objects in the heat pump 2.

Thus, the heat pump 2 is arranged to receive heat energy of the flue gas cooling liquid CL heated in the flue gas cooling unit 1, and heat energy of the district cooling fluid heated in the district cooling network. The received heat energy is used for raising temperature of the district heating fluid DHF.

In one embodiment, such as shown in Figure 1, the heat pump 2 is an absorption heat pump (AHP). The concept of the AHP is known *per se.* It may comprise a generator, an evaporator, an absorber and a condenser. Two fluids that function as an absorption medium and a refrigerant are arranged in the AHP. The principle of operation of the AHP is based on absorption and evaporation of the refrigerant. In one embodiment, the refrigerant is ammonia and the absorption medium is water (NH₃/H₂O).

In one embodiment, the generator of the heat pump is connected to a source of steam and/or hot water, such as the boiler 10 or another source, by a feed 16 of steam and/or hot water. Energy of the steam and/or hot water is used for running the AHP. Cooled steam and/or hot water may be returned to its source by a return 17 of feed.

In one embodiment, the evaporator of the heat pump is arranged for receiving heat from the flue gas cooling liquid CL, as described in this description. Heat energy received in the evaporator is transferred to the absorber of the heat pump by reactions of the second fluids. In the absorber, heat energy is transferred to the district heating fluid DHF that has cooled down in the circulation arrangement 6 of district heating system. The district heating fluid DHF is also directed through the condenser of the heat pump, in which the second fluid is adapted to condense from gas phase to liquid phase.

In another embodiment, the heat pump 2 is an electrical heat pump that comprises an electrical motor-driven compressor for driving the heat pump. In this embodiment, the feed 16 of steam and/or hot water and the return 17 of feed are not necessary.

A circulation arrangement 8 of district cooling system is connected to the heat pump 2 such that heat energy of district cooling fluid DCF coming from a district cooling network (not shown) and heated therein is transferred similarly as heat energy from the flue gas cooling liquid CL in the heat pump. The district cooling fluid DCF cools in the heat pump 2 and returned back in the circulation arrangement 8 of district cooling system.

In one embodiment, such as shown in Figure 1, the circulation arrangement 8 of district cooling system is connected to the transfer piping 19, i.e. district cooling fluid DCF is fed together with transfer fluid in the heat pump 2, and cooled fluid is returned from the transfer piping 19 to the circulation arrangement 8 of district cooling system.

In another embodiment, the circulation arrangement 8 of district cooling system is connected via a heat exchanger to the heat pump 2.

In one embodiment, the circulation arrangement 6 of district heating system is separate from the circulation arrangement 8 of district cooling system.
the circulation arrangement 8 of district cooling system is arranged to cool the same residential and commercial objects which the circulation arrangement of district heating system 6 is heating. In another embodiment, the circulation arrangement 8 of district cooling system is connected to another residential and commercial objects as the circulation arrangement of district heating system 6.

In one embodiment, such as shown in Figure 1, the circulation arrangement 6 of district heating system is connected to the heat pump 2 such that all the district heating fluid DHF is circulating through the heat pump 2.

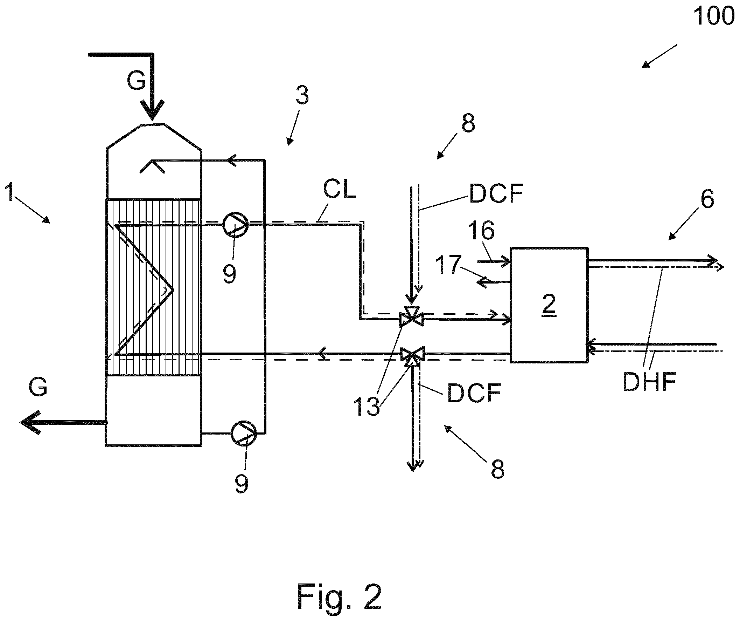

**Figure 2** is a schematic side view of another arrangement and method for recovering heat from flue gas of a boiler.

In one embodiment, such as shown in Figure 2, the flue gas cooling unit 1 comprises a flue gas condenser, in which the flue gas G is cooled by flue gas cooling liquid CL by passing it in tubes arranged in the tube heat exchanger. Flue gas G is arranged to flow outside the tubes. Heat energy is transferred from flue gas G to the flue gas cooling liquid CL through the tube walls.

In one embodiment, the flue gas cooling liquid CL is fed in the heat pump 2 and circulating it back therefrom to the flue gas cooling unit 1. In other words, heat exchanger 11 is not always necessary. District cooling fluid DCF may be circulated through the heat pump 2 with the flue gas cooling liquid CL.

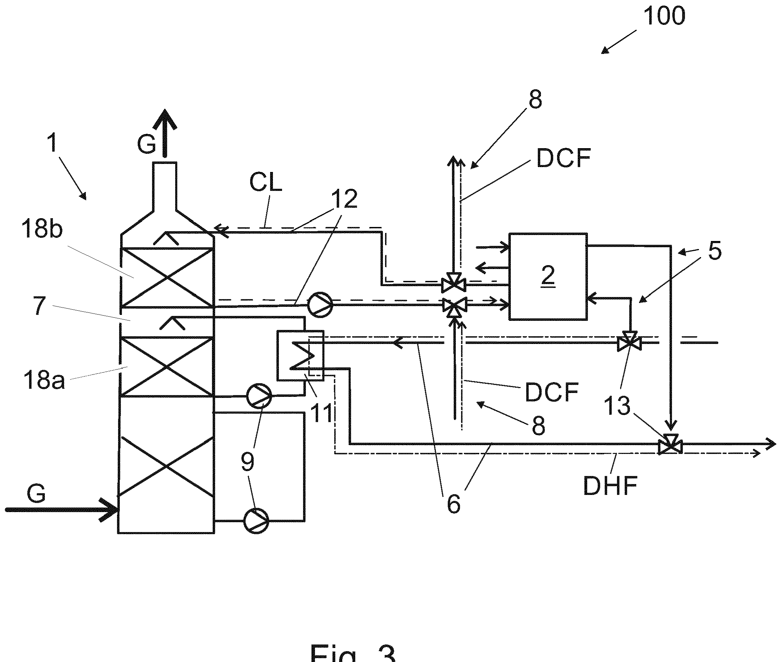

**Figure 3** is a schematic side view of a third arrangement and method for recovering heat from flue gas of a boiler.

In the flue gas scrubber 7, the flue gas is passed through one or more heat exchange zone(s) or packing zone(s). The flue gas scrubber 7 shown in Figure 1 comprises two packing zones 18a, 18b.

In the shown embodiment, there are three scrubbing water circuits in the scrubber 7. First of the circuits is connected to a first cooling zone arranged under the first packing zone 18a, second circuit to the first packing zone 18a, and third circuit to the second packing zone 18b. However, in some embodiments the circuits of scrubbing water may be arranged differently, e.g. there may be less or more than three scrubbing water circuits, and/or less or more than two packing zones.

In one embodiment, flue gas cooling liquid CL that is fed - or at least heat energy of which is fed - in the heat pump 2 is arranged to circulate through at least the last of the heat exchange zones, that is the third heat exchange zone connected to the second packing zone 18b in the embodiment shown in Figure 3. In another embodiment, said flue gas cooling liquid CL is arranged to circulate also another heat exchange zone, such as the second heat exchange zone connected to the first packing zone 18a.

The scrubbing water is circulated by using one or more pump(s) 9 from the flue gas scrubber 7 into a heat exchanger 11, and then back to the flue gas scrubber 7.

In one embodiment, the circulation arrangement 6 of district heating system comprises a by-pass piping 5 that is arranged for feeding only a part of the district heating fluid DHF coming from the circulation arrangement 6 of district heating system in the heat pump 2. Rest of said district heating fluid DHF is fed past the heat pump 2. In one embodiment, such as shown in Figure 3, said rest of the district heating fluid DHF is fed to a heat exchanger 11 where it is arranged to receive heat energy from scrubbing water from the second heat exchange zone. In another embodiments, said rest of the district heating fluid DHF is fed for receiving heat energy from some other heat exchange zone.

The relation of district heating fluid DHF fed in the heat pump 2 and past the pump may be controlled by e.g. valves 13.

The amount of the district cooling fluid DCF mixed with flue gas cooling liquid is preferably controlled e.g. by valves as shown in Figures.

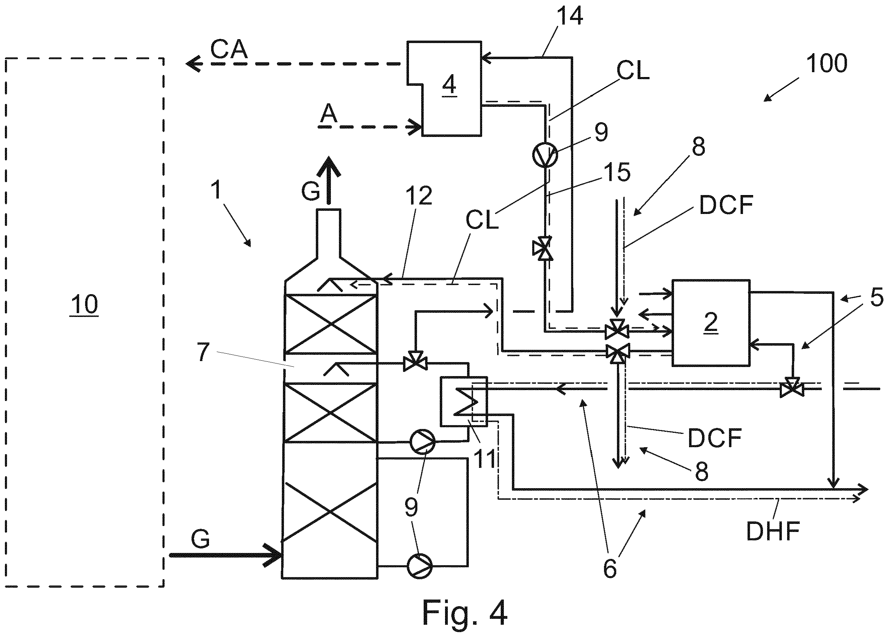

**Figure 4** is a schematic side view of a fourth arrangement and method for recovering heat from flue gas of a boiler.

In one embodiment, the arrangement comprises a combustion air humidifier 4 that is arranged for heating and moisturizing combustion air CA to be fed in the boiler 10.

The combustion air humidifier 4 improves the heat recovery capacity by increasing the moisture content of the combustion air CA and thereby increasing the moisture content of the flue gas G.

The combustion air humidifier 4 is connected to a flue gas cooling unit 1 by a feed piping 14 for receiving water therefrom and by a return channel leading the return water from the combustion air humidifier 4 back in the flue gas cooling unit 1.

The combustion air humidifier 4 receives flue gas cooling liquid CL in higher temperature for heating and humidifying said combustion air CA and returns said flue gas cooling liquid CL back in lower temperature to the flue gas cooling unit 1 by a return piping 15. The return piping 15 is arranged in relation to the heat pump 2 so that the heat pump 2 receives heat energy from flue gas cooling liquid CL returning from the combustion air humidifier 4. Said heat energy is transferred to the district heating fluid DHF in the heat pump 2.

In one embodiment, the district cooling fluid DCF coming from the district cooling system 8 is arranged to be fed in the return piping 15 and along said piping to the heat pump 2.

In one embodiment, the district cooling system 8 is connected to the piping 12 that is arranged for returning cooled flue gas cooling liquid back to the flue gas cooling unit 1, and cooled district cooling fluid DCF is taken from said piping 12 and fed in the district cooling system 8.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### REFERENCE SYMBOLS

- 1: flue gas cooling unit
- 2: heat pump
- 3: circulation of flue gas cooling liquid
- 4: combustion air humidifier
- 5: by-pass piping of district HEATING system
- 6: circulation arrangement of district heating system
- 7: flue gas scrubber
- 8: circulation arrangement of district cooling system
- 9: pump
- 10: boiler
- 11: heat exchanger
- 12: piping for flue gas cooling liquid
- 13: valve
- 14: feed piping
- 15: return piping
- 16: feed of steam and/or hot water
- 17: return of feed
- 18: packing zone
- 19: transfer piping

- 100: arrangement

- A: air
- CA: combustion air
- CL: flue gas cooling liquid
- DHF: district heating fluid
- DCF: district cooling fluid
- G: flue gas

## Claims

1. A method for recovering heat from flue gas of a boiler (10), the method comprising
- passing the flue gas (G) of the boiler though a flue gas cooling unit (1),
- cooling the flue gas (G) in the flue gas cooling unit (1), said cooling comprising transferring heat from the flue gas (G) into a circulation (3) of a flue gas cooling liquid (CL),
wherein
- a heat pump (2) that is coupled to a circulation arrangement (6) of a district heating system, wherein the method further comprises
- transferring in the heat pump (2) heat energy (H) received
-- from said cooling liquid (CL)
-- into said circulation arrangement (6) of district heating system, for
-- lowering the temperature of said flue gas cooling liquid (CL), and
-- raising the temperature of heating fluid of said district heating system, **characterized by**
- transferring heat energy of said flue gas cooling liquid (CL) heated in the flue gas cooling unit (1) into the heat pump (2),
- arranging the heat pump (2) for receiving heat energy also from a circulation arrangement (8) of a district cooling system,
- transferring in the heat pump (2) heat energy (H) received from said circulation arrangement (8) of district cooling system,
and lowering the temperature of cooling fluid of said district cooling system.

2. The method as claimed in claim 1, comprising
- cooling the flue gas (G) in a flue gas scrubber by said flue gas cooling liquid (CL).

3. The method as claimed in claim 1, comprising cooling the flue gas (G) in a tube heat exchanger by said flue gas cooling liquid (CL).

4. The method as claimed in any of the preceding claims, comprising
- feeding flue gas cooling liquid (CL) from the flue gas cooling unit (1) into a combustion air humidifier (4),
- heating and moisturizing combustion air to be fed in the boiler by heat energy of said flue gas cooling liquid (CL) in said combustion air humidifier (4), and
- exiting flue gas cooling liquid (CL) cooled in the combustion air humidifier (4) from said combustion air humidifier (4), the method further comprising
- transferring heat energy of flue gas cooling liquid (CL) exiting the combustion air humidifier (4) into the heat pump (2) .

5. The method as claimed in any of the preceding claims, comprising
- feeding the flue gas cooling liquid (CL) in the heat pump and circulating it back therefrom to the flue gas cooling unit (1).

6. The method as claimed in any of claims 1 - 4, comprising
- feeding the flue gas cooling liquid (CL) in a heat exchanger (11), and in the heat exchanger (11),
- transferring heat from the flue gas cooling liquid (CL) into a transfer liquid circulating between the heat exchanger (11) and the heat pump (2).

7. The method as claimed in any of claims 1 - 6, wherein
- the heat pump (2) is an absorption heat pump (AHP).

8. The method as claimed in claim 7, comprising
- feeding steam and/or hot water in a generator of the AHP for driving the AHP.

9. The method as claimed in any of the preceding claims, comprising
- feeding all the district heating fluid (DHF) coming from the circulation arrangement (6) of district heating system in the heat pump (2).

10. The method as claimed in any of claims 1 - 8, comprising
- feeding only a part of the district heating fluid (DHF) coming from the circulation arrangement (6) of district heating system in the heat pump (2), and
- feeding rest of said district heating fluid (DHF) past the heat pump (2).

11. An arrangement for recovering heat from flue gas of a boiler (10), the arrangement (100) comprising
- a flue gas cooling unit (1), configured to cool the flue gas (G) with a flue gas cooling liquid (CL),
- a heat pump (2) coupled to
- a circulation arrangement (6) of a district heating system,
- the heat pump (2) arranged to receive
- flue gas cooling liquid (CL) heated in said flue gas cooling unit (1), and
- district heating fluid from the circulation arrangement (6) of a district heating system, wherein
- the heat pump (2) is configured for
- raising temperature of the district heating fluid, **characterized in that**
- the heat pump (2) is coupled to
- the flue gas cooling unit (1) for receiving heat energy from the flue gas cooling liquid (CL), and
- a circulation arrangement (8) of a district cooling system for receiving district cooling fluid from the circulation arrangement (8) of a district cooling system and receiving heat energy from the district cooling fluid, wherein the heat pump (2) is configured to
- use the heat energy received from said flue gas cooling liquid (CL) and said district cooling fluid for raising temperature of the district heating fluid DHF.

12. The arrangement as claimed in claim 11, wherein the flue gas cooling unit (1) comprises a flue gas scrubber or a flue gas condenser.

13. The arrangement as claimed in any of claims 11 - 12, comprising
- a combustion air humidifier (4) arranged for heating and moisturizing combustion air to be fed in the boiler, wherein
- the combustion air humidifier (4) is connected to the the flue gas cooling unit (1) by a feed piping (14) for receiving flue gas cooling liquid (CL) in higher temperature for heating said combustion air,
- the combustion air humidifier (4) being arranged for returning said flue gas cooling liquid (CL) in lower temperature back to the flue gas cooling unit (1) by a return piping (15), wherein
- the heat pump (2) is arranged in relation to the return piping for receiving heat energy therefrom and transfer said heat energy to the district heating fluid.

14. The arrangement as claimed in any of claims 11 - 13, comprising a heat exchanger (11) arranged for
- receiving the flue gas cooling liquid (CL) from the flue gas cooling unit (1) and/or the combustion air humidifier (4), and
- transferring heat from the flue gas cooling liquid (CL) into a transfer liquid arranged to circulate between the heat exchanger (11) and the heat pump (2).

15. The arrangement as claimed in any of claims 11 - 14, wherein the heat pump (2) is an absorption heat pump (AHP).

16. the arrangement as claimed in any of claims 11 - 15, wherein the circulation arrangement (6) of district heating system is connected to the heat pump (2) for circulating all the district heating fluid (DHF) through the heat pump (2) .

17. The arrangement as claimed in any of claims 11 - 15, wherein the circulation arrangement (6) of district heating system comprises a by-pass piping (5) arranged for feeding only a part of the district heating fluid (DHF) coming from the circulation arrangement (6) of district heating system in the heat pump (2).

## Patentansprüche

1. Verfahren zur Rückgewinnung von Wärme aus dem Rauchgas eines Kessels (10), wobei das Verfahren Folgendes umfasst:
- Leiten des Rauchgases (G) des Kessels durch eine Rauchgaskühleinheit (1),
- Kühlen des Rauchgases (G) in der Rauchgaskühleinheit (1), wobei das Kühlen das Übertragen von Wärme aus dem Rauchgas (G) in einen Kreislauf (3) einer Rauchgaskühlflüssigkeit (CL) umfasst,
wobei
- eine Wärmepumpe (2), die mit einer Kreislaufanordnung (6) eines Fernwärmesystems gekoppelt ist, wobei das Verfahren ferner Folgendes umfasst:
- Übertragen in der Wärmepumpe (2) von Wärmeenergie (H), die
- von der Kühlflüssigkeit (CL) empfangen wird,
- in die Kreislaufanordnung (6) des Fernwärmesystems, zum
- Absenken der Temperatur der Rauchgaskühlflüssigkeit (CL) und
- Erhöhen der Temperatur des Wärmefluids des Fernwärmesystems, **gekennzeichnet durch**
- Übertragen von Wärmeenergie der Rauchgaskühlflüssigkeit (CL), die in der Rauchgaskühleinheit (1) erhitzt wurde, in die Wärmepumpe (2),
- Einrichten der Wärmepumpe (2) zum Empfangen von Wärmeenergie auch von einer Kreislaufanordnung (8) eines Fernkältesystems,
- Übertragen in der Wärmepumpe (2) von Wärmeenergie (H), die von der Kreislaufanordnung (8) des Fernkältesystems empfangen wird,
und Absenken der Temperatur von Kältefluid des Fernkältesystems.

2. Verfahren nach Anspruch 1, umfassend
- Kühlen des Rauchgases (G) in einem Rauchgaswäscher durch die Rauchgaskühlflüssigkeit (CL).

3. Verfahren nach Anspruch 1, umfassend Kühlen des Rauchgases (G) in einem Röhrenwärmetauscher durch die Rauchgaskühlflüssigkeit (CL).

4. Verfahren nach einem der vorangehenden Ansprüche, umfassend
- Zuführen von Rauchgaskühlflüssigkeit (CL) aus der Rauchgaskühleinheit (1) in einen Verbrennungsluftbefeuchter (4),
- Erhitzen und Befeuchten von Verbrennungsluft, die dem Kessel zugeführt werden soll, durch Wärmeenergie der Rauchgaskühlflüssigkeit (CL) in dem Verbrennungsluftbefeuchter (4), und
- Austreten lassen von Rauchgaskühlflüssigkeit (CL), die in dem Verbrennungsluftbefeuchter (4) gekühlt wurde, aus dem Verbrennungsluftbefeuchter (4), wobei das Verfahren ferner umfasst
- Übertragen von Wärmeenergie der Rauchgaskühlflüssigkeit (CL), die aus dem Verbrennungsluftbefeuchter (4) austritt, in die Wärmepumpe (2).

5. Verfahren nach einem der vorangehenden Ansprüche, umfassend
- Zuführen der Rauchgaskühlflüssigkeit (CL) in die Wärmepumpe und Rückzirkulieren derselben von dort zur Rauchgaskühleinheit (1).

6. Verfahren nach einem der Ansprüche 1 - 4, umfassend
- Zuführen der Rauchgaskühlflüssigkeit (CL) in einen Wärmetauscher (11) und in dem Wärmetauscher (11)
- Übertragen von Wärme von der Rauchgaskühlflüssigkeit (CL) in eine Übertragungsflüssigkeit, die zwischen dem Wärmetauscher (11) und der Wärmepumpe (2) zirkuliert.

7. Verfahren nach einem der Ansprüche 1 - 6, wobei
- die Wärmepumpe (2) eine Absorptionswärmepumpe (AHP) ist.

8. Verfahren nach Anspruch 7, umfassend
- Zuführen von Dampf und/oder heißem Wasser in einen Generator der AHP zum Antreiben der AHP.

9. Verfahren nach einem der vorangehenden Ansprüche, umfassend
- Zuführen des gesamten Fernwärmefluids (DHF), das von der Kreislaufanordnung (6) des Fernwärmesystems kommt, in die Wärmepumpe (2).

10. Verfahren nach einem der Ansprüche 1 - 8, umfassend
- Zuführen nur eines Teils des Fernwärmefluids (DHF), das von der Kreislaufanordnung (6) des Fernwärmesystems kommt, in die Wärmepumpe (2) und
- Zuführen des restlichen Fernwärmefluids (DHF) an der Wärmepumpe (2) vorbei.

11. Anordnung zur Rückgewinnung von Wärme aus dem Rauchgas eines Kessels (10), wobei die Anordnung (100) Folgendes umfasst:
- eine Rauchgaskühleinheit (1), die dazu konfiguriert ist, das Rauchgas (G) mit einer Rauchgaskühlflüssigkeit (CL) zu kühlen,
- eine Wärmepumpe (2), die gekoppelt ist mit
- einer Kreislaufanordnung (6) eines Fernwärmesystems,
- wobei die Wärmepumpe (2) dazu eingerichtet ist,
- Rauchgaskühlflüssigkeit (CL), die in der Rauchgaskühleinheit (1) erhitzt wurde, und
- Fernwärmefluid von der Kreislaufanordnung (6) eines Fernwärmesystems, zu empfangen, wobei
- die Wärmepumpe (2) konfiguriert ist zum
- Erhöhen der Temperatur des Fernwärmefluids, **dadurch gekennzeichnet, dass**
- die Wärmepumpe (2) gekoppelt ist mit
- der Rauchgaskühleinheit (1) zum Empfangen von Wärmeenergie von der Rauchgaskühlflüssigkeit (CL) und
- einer Kreislaufanordnung (8) eines Fernkältesystems zum Empfangen von Fernkältefluid von der Kreislaufanordnung (8) eines Fernkältesystems und zum Empfangen von Wärmeenergie von dem Fernkältefluid, wobei die Wärmepumpe (2) konfiguriert ist zum
- Verwenden der Wärmeenergie, die von der Rauchgaskühlflüssigkeit (CL) und dem Fernkältefluid empfangen wird, zum Erhöhen der Temperatur des Fernwärmefluids DHF.

12. Anordnung nach Anspruch 11, wobei die Rauchgaskühleinheit (1) einen Rauchgaswäscher oder einen Rauchgaskondensator umfasst.

13. Anordnung nach einem der Ansprüche 11 - 12, umfassend
- einen Verbrennungsluftbefeuchter (4), der zum Erhitzen und Befeuchten von Verbrennungsluft, die dem Kessel zugeführt werden soll, eingerichtet ist, wobei
- der Verbrennungsluftbefeuchter (4) mit der Rauchgaskühleinheit (1) durch eine Zuführleitung (14) zum Empfangen von Rauchgaskühlflüssigkeit (CL) mit höherer Temperatur zum Erhitzen der Verbrennungsluft verbunden ist,
- der Verbrennungsluftbefeuchter (4) eingerichtet ist zum Rückführen der Rauchgaskühlflüssigkeit (CL) mit niedrigerer Temperatur zurück zur Rauchgaskühleinheit (1) durch eine Rückführleitung (15), wobei
- die Wärmepumpe (2) in Bezug auf die Rückführleitung zum Empfangen von Wärmeenergie von dieser und zum Übertragen der Wärmeenergie an das Fernwärmefluid eingerichtet ist.

14. Anordnung nach einem der Ansprüche 11 - 13, umfassend einen Wärmetauscher (11), der eingerichtet ist zum
- Empfangen der Rauchgaskühlflüssigkeit (CL) von der Rauchgaskühleinheit (1) und/oder dem Verbrennungsluftbefeuchter (4) und
- Übertragen von Wärme von der Rauchgaskühlflüssigkeit (CL) in eine Übertragungsflüssigkeit, die dazu eingerichtet ist, zwischen dem Wärmetauscher (11) und der Wärmepumpe (2) zu zirkulieren.

15. Anordnung nach einem der Ansprüche 11 - 14, wobei die Wärmepumpe (2) eine Absorptionswärmepumpe (AHP) ist.

16. Anordnung nach einem der Ansprüche 11 - 15, wobei die Kreislaufanordnung (6) des Fernwärmesystems mit der Wärmepumpe (2) zum Zirkulieren des gesamten Fernwärmefluids (DHF) durch die Wärmepumpe (2) verbunden ist.

17. Anordnung nach einem der Ansprüche 11 - 15, wobei die Kreislaufanordnung (6) des Fernwärmesystems eine Bypass-Leitung (5) umfasst, die zum Zuführen nur eines Teils des Fernwärmefluids (DHF), das von der Kreislaufanordnung (6) des Fernwärmesystems kommt, in die Wärmepumpe (2) eingerichtet ist.

## Revendications

1. Procédé de récupération de chaleur à partir d'un gaz de combustion d'une chaudière (10), le procédé comprenant
- un passage du gaz (G) de combustion de la chaudière à travers une unité (1) de refroidissement de gaz de combustion,
- un refroidissement du gaz (G) de combustion dans l'unité (1) de refroidissement de gaz de combustion, ledit refroidissement comprenant un transfert de chaleur du gaz (G) de combustion dans une circulation (3) d'un liquide de refroidissement (CL) de gaz de combustion,
dans lequel
- une pompe (2) à chaleur qui est couplée à un agencement (6) de circulation d'un réseau de chauffage urbain, dans lequel le procédé comprend en outre
- un transfert dans la pompe (2) à chaleur de l'énergie thermique (H) reçue
-- dudit liquide de refroidissement (CL)
-- dans ledit agencement (6) de circulation du réseau de chauffage urbain, pour
-- baisser la température dudit liquide de refroidissement (CL) de gaz de combustion, et
-- augmenter la température du fluide de chauffage dudit réseau de chauffage urbain, **caractérisé par**
- un transfert de l'énergie thermique dudit liquide de refroidissement (CL) de gaz de combustion chauffé dans l'unité (1) de refroidissement de gaz de combustion dans la pompe (2) à chaleur,
- un agencement de la pompe (2) à chaleur pour recevoir de l'énergie thermique également d'un agencement (8) de circulation d'un réseau de refroidissement urbain,
- un transfert dans la pompe (2) à chaleur de l'énergie thermique (H) reçue dudit agencement (8) de circulation du réseau de refroidissement urbain,
et un abaissement de la température du fluide de refroidissement dudit réseau de refroidissement urbain.

2. Procédé selon la revendication 1, comprenant
- un refroidissement du gaz (G) de combustion dans un laveur de gaz de combustion par ledit liquide de refroidissement (CL) de gaz de combustion.

3. Procédé selon la revendication 1, comprenant un refroidissement du gaz (G) de combustion dans un échangeur de chaleur à tubes par ledit liquide de refroidissement (CL) de gaz de combustion.

4. Procédé selon l'une quelconque des revendications précédentes, comprenant
- une introduction du liquide de refroidissement (CL) de gaz de combustion provenant de l'unité (1) de refroidissement de gaz de combustion dans un humidificateur (4) d'air de combustion,
- un chauffage et une humidification d'un air de combustion devant être introduit dans la chaudière par l'énergie thermique dudit liquide de refroidissement (CL) de gaz de combustion dans ledit humidificateur (4) d'air de combustion, et
- une extraction du liquide de refroidissement (CL) de gaz de combustion refroidi dans l'humidificateur (4) d'air de combustion à partir dudit humidificateur (4) d'air de combustion, le procédé comprenant en outre
- un transfert de l'énergie thermique du liquide de refroidissement (CL) de gaz de combustion extrait de l'humidificateur (4) d'air de combustion dans la pompe (2) à chaleur.

5. Procédé selon l'une quelconque des revendications précédentes, comprenant
- une introduction du liquide de refroidissement (CL) de gaz de combustion dans la pompe à chaleur et son renvoi depuis celle-ci vers l'unité (1) de refroidissement de gaz de combustion.

6. Procédé selon l'une quelconque des revendications 1 à 4, comprenant
- une introduction du liquide de refroidissement (CL) de gaz de combustion dans un échangeur (11) de chaleur, et dans l'échangeur (11) de chaleur,
- un transfert de la chaleur du liquide de refroidissement (CL) de gaz de combustion dans un liquide de transfert circulant entre l'échangeur (11) de chaleur et la pompe (2) à chaleur.

7. Procédé selon l'une quelconque des revendications 1 à 6, dans lequel
- la pompe (2) à chaleur est une pompe à chaleur à absorption (AHP).

8. Procédé selon la revendication 7, comprenant
- une introduction de vapeur et/ou d'eau chaude dans un générateur de l'AHP pour entraîner l'AHP.

9. Procédé selon l'une quelconque des revendications précédentes, comprenant
- une introduction de tout le fluide de chauffage urbain (DHF) provenant de l'agencement (6) de circulation du réseau de chauffage urbain dans la pompe (2) à chaleur.

10. Procédé selon l'une quelconque des revendications 1 à 8,
comprenant
- une introduction d'une partie seulement du fluide de chauffage urbain (DHF) provenant de l'agencement (6) de circulation du réseau de chauffage urbain dans la pompe (2) à chaleur, et
- une introduction du reste dudit fluide de chauffage urbain (DHF) devant la pompe (2) à chaleur.

11. Agencement de récupération de chaleur à partir d'un gaz de combustion d'une chaudière (10), l'agencement (100) comprenant
- une unité (1) de refroidissement de gaz de combustion, configurée pour refroidir le gaz (G) de combustion avec un liquide de refroidissement (CL) de gaz de combustion,
- une pompe (2) à chaleur couplée à
- un agencement (6) de circulation d'un réseau de chauffage urbain,
- la pompe (2) à chaleur étant agencée pour recevoir
- un liquide de refroidissement (CL) de gaz de combustion chauffé dans ladite unité (1) de refroidissement de gaz de combustion, et
- un fluide de chauffage urbain provenant de l'agencement (6) de circulation d'un réseau de chauffage urbain, dans lequel
- la pompe (2) à chaleur est configurée pour
- augmenter la température du fluide de chauffage urbain, **caractérisé en ce que**
- la pompe (2) à chaleur est couplée à
- l'unité (1) de refroidissement de gaz de combustion pour recevoir l'énergie thermique provenant du liquide de refroidissement (CL) de gaz de combustion, et
- un agencement (8) de circulation d'un système de refroidissement urbain pour recevoir un fluide de refroidissement urbain provenant de l'agencement (8) de circulation d'un système de refroidissement urbain et recevoir l'énergie thermique provenant du fluide de refroidissement urbain, dans lequel la pompe (2) à chaleur est configurée pour
- utiliser l'énergie thermique reçue dudit liquide de refroidissement (CL) de gaz de combustion et dudit fluide de refroidissement urbain pour augmenter la température du fluide de chauffage urbain DHF.

12. Agencement selon la revendication 11, dans lequel l'unité (1) de refroidissement de gaz de combustion comprend un laveur de gaz de combustion ou un condenseur de gaz de combustion.

13. Agencement selon l'une quelconque des revendications 11 à 12, comprenant
- un humidificateur (4) d'air de combustion agencé pour chauffer et humidifier un air de combustion devant être introduit dans la chaudière, dans lequel
- l'humidificateur (4) d'air de combustion est relié à l'unité (1) de refroidissement de gaz de combustion par une conduite (14) d'alimentation pour recevoir un liquide de refroidissement (CL) de gaz de combustion à une température plus élevée pour chauffer ledit air de combustion,
- l'humidificateur (4) d'air de combustion étant agencé pour renvoyer ledit liquide de refroidissement (CL) de gaz de combustion à une température inférieure vers l'unité (1) de refroidissement de gaz de combustion au moyen d'une conduite (15) de retour, dans lequel
- la pompe (2) à chaleur est agencée par rapport à la conduite de retour de façon à recevoir de l'énergie thermique en provenance de celle-ci et à transférer ladite énergie thermique vers le fluide de chauffage urbain.

14. Agencement selon l'une quelconque des revendications 11 à 13, comprenant un échangeur (11) de chaleur agencé pour
- recevoir le liquide de refroidissement (CL) de gaz de combustion en provenance de l'unité (1) de refroidissement de gaz de combustion et/ou de l'humidificateur (4) d'air de combustion, et
- transférer la chaleur provenant du liquide de refroidissement (CL) de gaz de combustion dans un liquide de transfert agencé pour circuler entre l'échangeur (11) de chaleur et la pompe (2) à chaleur.

15. Agencement selon l'une quelconque des revendications 11 à 14, dans lequel la pompe (2) à chaleur est une pompe à chaleur à absorption (AHP).

16. Agencement selon l'une quelconque des revendications 11 à 15, dans lequel l'agencement (6) de circulation du réseau de chauffage urbain est relié à la pompe (2) à chaleur pour faire circuler la totalité du fluide de chauffage urbain (DHF) à travers la pompe (2) à chaleur.

17. Agencement selon l'une quelconque des revendications 11 à 15, dans lequel l'agencement (6) de circulation du réseau de chauffage urbain comprend une conduite (5) de dérivation agencée pour introduire une partie seulement du fluide de chauffage urbain (DHF) provenant de l'agencement (6) de circulation du réseau de chauffage urbain dans la pompe (2) à chaleur.
